(19) Europäisches Patentamt
European Patent Office
Office européen des brevets

(11) **EP 3 568 652 B1**

(12) **EUROPÄISCHE PATENTSCHRIFT**

(45) Veröffentlichungstag und Bekanntmachung des Hinweises auf die Patenterteilung:
**04.12.2024 Patentblatt 2024/49**

(21) Anmeldenummer: **18702901.2**

(22) Anmeldetag: **15.01.2018**

(51) Internationale Patentklassifikation (IPC):
*F25D 31/00* *(2006.01)*

(52) Gemeinsame Patentklassifikation (CPC):
**F25D 31/005; F25D 31/007; H05B 3/0052;**
A47J 36/2433

(86) Internationale Anmeldenummer:
**PCT/DE2018/100023**

(87) Internationale Veröffentlichungsnummer:
**WO 2018/130252 (19.07.2018 Gazette 2018/29)**

(54) **VORRICHTUNG UND VERFAHREN ZUM AUFTAUEN EINES GEFRORENEN GETRÄNKS IN EINER GLASTRINKFLASCHE**

APPARATUS AND METHOD FOR THAWING A FROZEN DRINK IN A GLASS DRINKING BOTTLE

DISPOSITIF ET PROCÉDÉ POUR DÉCONGÉLER UN BOISSON CONGÉLÉ DANS UNE BOUTEILLE DE BOISSON EN VERRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.01.2017 DE 102017100647**

(43) Veröffentlichungstag der Anmeldung:
**20.11.2019 Patentblatt 2019/47**

(73) Patentinhaber: **Kukki GmbH**
**14167 Berlin (DE)**

(72) Erfinder: **KLEMM, Josef**
**14165 Berlin (DE)**

(74) Vertreter: **Bittner, Thomas L.**
**Boehmert & Boehmert**
**Anwaltspartnerschaft mbB**
**Pettenkoferstrasse 22**
**80336 München (DE)**

(56) Entgegenhaltungen:
WO-A2-2011/042698    DE-A1- 3 010 889
DE-C- 704 788    GB-A- 814 808
JP-A- H0 373 111    JP-A- H0 373 112
JP-A- H0 386 113    JP-A- H0 611 231
JP-U- S61 157 428    US-A- 5 966 961
US-A1- 2004 140 304    US-A1- 2005 045 617
US-A1- 2006 188 418    US-A1- 2016 242 598
US-B1- 7 089 749

**Beschreibung**

Die Erfindung betrifft eine Vorrichtung und ein Verfahren zum Auftauen eines gefrorenen Getränks in einer Glastrinkflasche.

Hintergrund

Es sind Vorrichtungen bekannt, mit denen ein gefrorenes Gut aufgetaut werden kann. Hierzu gehören beispielsweise Mikrowellengeräte.

Das Dokument US 2005/045617 A1 offenbart ein System und ein Verfahren zur Erwärmung von Nahrung für Säuglinge. Die Erwärmung des Futters oder der Milch wird erreicht, indem eine Raumluft angesaugt wird, und an einem von dem Aufnahmeraum für die Milchflaschen getrennten Raum angeordneten Heizelement, dieses Heizelement vorüberstreichend vorbeigeleitet und erwärmt in den Aufnahmeraum für die Milchflaschen zur Erwärmung letzterer eingeleitet wird.

Die Patentschrift US 7 089 749 B1 offenbart ein thermoelektrisch erwärmtes/gekühltes Becherhaltersystem, worin ein in gutem thermischen Kontakt mit der Tasse vorgesehenes Peltierelement vorgesehen ist. Ein Gebläse dient dem Forttragen von Wärme von an den Peltierelementen vorgesehenen Rippen, wenn diese zum Kühlen der Flüssigkeit betrieben werden.

In dem Dokument JP H03 86113 A ist eine Warmhaltevorrichtung offenbart, in welcher ein Wärmeaustausch zur raschen Erzielung einer gewünschten Warmhaltetemperatur mittels eines durch einen Motor M angetriebenen Gebläses F erfolgt.

Das Dokument GB 814 808 A offenbart eine verbesserte Isolationswandstruktur, insbesondere für Kühlschrankkammern. Die Isolationsfähigkeit der Isolationswand, die im Inneren aus einen faserigen Material gebildet ist, kann herabgesetzt werden, indem das in dem faserigen Material enthaltene Gas in Bewegung gesetzt wird, so dass, beispielsweise, eine bessere Kühlung des Kühlfachs durch das Gefrierfach ermöglicht wird.

Aus dem Dokument DE 704 788 A ist eine Einrichtung zur Erhitzung von Flüssigkeiten mittels elektrischer oder nichtelektrischer Heizungsvorrichtungen, deren Heizenergie durch Wärmestrahlung auf die zu erhitzende Flüssigkeit übertragen wird, bekannt.

In der Anmeldung US 2016/242598 A1 ist ein geheizter oder gekühlter tragbarer Behälter beschrieben. Der Behälter ist fix mit einer Heiz-/Kühlvorrichtung an seinem Boden verbunden. In einer Ausführungsform kann unter Ausnutzung des Kamineffekts die Flüssigkeit gekühlt werden, indem ein Luftstrom zwischen der Flüssigkeit und der inneren Seite der Außenwand einsetzt.

Das Dokument US 2004/140304 A1 betrifft eine Vorrichtung zum Kühlen und Erwärmen einer Babyflasche in einer einzelnen Kammer und ein Verfahren zum Betreiben der Vorrichtung.

Zusammenfassung

Aufgabe der Erfindung ist es, eine Vorrichtung und ein Verfahren zum Auftauen eines gefrorenen Getränks in einer Glastrinkflasche anzugeben.

Zur Lösung der Aufgabe sind eine Vorrichtung und ein Verfahren zum Auftauen eines gefrorenen Getränks in einer Glastrinkfalsche nach den unabhängigen Ansprüchen 1 und 13 geschaffen. Alternative Ausgestaltungen sind Gegenstand von abhängigen Unteransprüchen.

Die Heizeinrichtung kann eingerichtet sein, eine Heizleistung zwischen etwa 1 kW und etwa 4 kW bereitzustellen, alternativ zwischen etwa 2 kW und etwa 3 kW.

Es kann vorgesehen sein, dass ein Raum zwischen den Wärmestrahlern und der Glastrinkflasche, wenn diese in dem Flaschenaufnahmeraum angeordnet ist, leer ist, sodass eine direkte Abstrahlung oder Einstrahlung der Wärmeenergie von den Wärmestrahlern auf die Glastrinkflasche ermöglicht ist. Die Glastrinkflasche kann in dem Flaschenaufnahmeraum frei von Wärmeleitung aufgrund von Berührungskontakt erhitzt werden, also beispielsweise ausschließlich aufgrund von Einleitung von Wärmeenergie mittels Wärmestrahlung.

Der Lufteingang kann im Bodenbereich des Gehäuses und / oder benachbart hierzu ausgebildet sein, beispielsweise mit einem oder mehreren Durchbrüchen in der äußeren Gehäusewand. Der Luftausgang kann in einem oberen Teil des Gehäuses im Deckbereich und / oder benachbart hierzu ausgebildet sein, zum Beispiel mittels eines oder mehrerer Durchbrüche in der Gehäusewand.

Die Luftfördereinrichtung zum Ansaugen und zum Fördern der angesaugten Luft in der Luftführung kann ein oder mehrere Ventilatoren umfassen.

Eine Öffnung zum Einführen der Glastrinkflasche in den Flaschenaufnahmeraum kann deckseitig an dem Gehäuse ausgebildet sein.

Die Wärmestrahler können von einer Innenwand umgeben sein, und der thermisch isolierende Raum kann zwischen der Innenwand und der äußeren Gehäusewand angeordnet sein. Die die Wärmestrahler umgebende Innenwand, die zwischen der äußeren Gehäusewand und den Wärmestrahlern angeordnet ist, kann umlaufend durchgehend oder unterbrochen ausgeführt sein. Die äußere Gehäusewand und / oder die Innenwand können aus Metall oder metallisiertem Glas (Spiegelglas) bestehen. Es kann eine ein- oder eine mehrstückige Ausgestaltung vorgesehen sein. Bei dieser oder anderen Ausführungsformen kann das Gehäuse mit von Blick von eine runde oder eine eckige Querschnittsfläche aufweisen.

Der thermisch isolierende Raum kann zumindest teilweise mit einem thermisch isolierenden Material ausgefüllt sein. Als temperaturbeständige Wärmeisolationsmaterialien können zum Beispiel Glas-, Stein- und / oder Mineralwolle zum Einsatz kommen.

Es kann vorgesehen sein, dass die Kühlluft beim Führen entlang der Luftführung das thermisch isolierende Material durchströmt.

Die Luftführung kann elektrische Kontakt- oder Anschlussbereiche der Wärmestrahler erfassend ausgebildet sein. Bei dieser Ausführungsform strömt die Kühlluft über oder um die elektrischen Kontakt- oder Anschlussbereiche der Wärmestrahler und kühlt diese so. Beispielsweise können so Sockel der Wärmestrahler gekühlt werden, beispielsweise Lampensockel. Die elektrischen Kontakt- oder Anschlussbereiche können zumindest teilweise außerhalb des Flaschenaufnahmeraums angeordnet sein. Dieses kann zum Beispiel mittels eines oder mehrerer in dem Gehäuse angeordneter Wandabschnitte ausgebildet sein. Eine solche räumliche Trennung kann mit einem oder mehreren horizontal verlaufenden Wandabschnitten hergestellt sein. Ein unterer horizontaler Wandabschnitt kann hierbei in einer Ausgestaltung gleichzeitig eine Standfläche für die Glastrinkflasche bereitstellen, wenn diese in dem Flaschenaufnahmeraum angeordnet ist. Bei dieser oder anderer Ausgestaltungen kann der untere horizontale Wandabschnitt einen Teil des Innenraums im Gehäuse abtrennen, in welchem Funktionskomponenten der Vorrichtung angeordnet sind, beispielsweise ein oder mehrere Ventilatoren und / oder Schaltungselemente, zum Beispiel Schaltungselemente einer Steuereinrichtung und / oder der Heizeinrichtung.

Die Luftführung kann eine Standfläche, auf welcher die Glastrinkflasche stehen kann, wenn diese in dem Flaschenaufnahmeraum angeordnet ist, erfassend ausgebildet sein. Bei dieser Ausführung verläuft die Luftführung entlang der Standfläche, insbesondere auf einer Unterseite der Standfläche, auf der die Glastrinkflasche steht, wenn sie in dem Flaschenaufnahmeraum angeordnet ist.

Die Heizeinrichtung kann eine Anordnung von Stabwärmestrahlern aufweisen, die um den Flaschenaufnahmeraum herum angeordnet sind. Mehrere Heizstäbe, die im Auftaubetrieb jeweils Wärmestrahlung abgeben, können um den Flaschenaufnahmeraum herum vorgesehen sein. Die Wärmestrahler können die Strahlung im infrarotbereich absenden. Geeignet hierfür sind zum Beispiel Infrarot-Halogen-Leuchtstäbe oder - Leuchtmittel, bei denen ein glühender Draht in einem mit Halogengas gefüllten Glasgehäuse angeordnet ist. Das Halogengas schützt den Wärmeenergie abstrahlenden Heizdraht vor sauerstoffhaltiger Atmosphäre. Dies erhöht die Lebensdauer der Strahler. Für verschiedene Anwendungsfälle können unterschiedliche Infrarotlicht-Wellenlängen wie zum Beispiel $0.98\,\mu\mathrm{m}$, $1.2\,\mu\mathrm{m}$ oder $1.6\,\mu\mathrm{m}$ eingesetzt werden. Je nach aufzutauendem Gut können die Wellenlängen auf das Getränk abgestimmt werden. Möglich ist auch eine Kombination mehrerer Wellenlängen.

An den Wärmestrahlern können ein oder mehrere Reflektoren vorgesehen sein, die die Strahlung auf das aufzutauende Getränk richten. Hierdurch können der Wirkungsgrad und die Effizienz des Auftauprozesses erhöht werden. Die Reflektoren können alternativ oder ergänzend außerhalb der Wärmestrahler angeordnet sein. Sie können das Abstrahlverhalten so beeinflussen, dass die Glastrinkfalsche mit für den Auftauprozess optimaler Energieverteilung angestrahlt wird. Hierfür eignen sich zum Beispiel Spiegelwerkstoffe aus Glas und / oder Metall (metallisiertes Glas oder Metall), sowie auf das Glas aufgebrachte keramische Beschichtungen. Die Form des oder der Reflektoren kann parabolisch sein, und die Wärmestrahler können jeweils im Brennpunkt angeordnet sein, um eine parallele homogene Abstrahlung zur Glastrinkfalsche hin zu ermöglichen. Über einen elliptischen Reflektor kann die Abstrahlung zur Glastrinkfalsche hin fokussiert oder aufgeweitet werden.

An einer Gehäuseöffnung, über welche die Glastrinkflasche in den Flaschenaufnahmeraum einführbar ist, kann im Gehäuse ein Eingriffsschutz angeordnet sein. Der Eingriffsschutz schützt den Benutzer davor, dass er mit den Fingern beim Einstellen oder beim Herausnehmen der Glastrinkflasche unbeabsichtigt in zu große Nähe oder sogar in Berührungskontakt mit den Wärmestrahlern kommt. Zu diesem Zweck kann sich der Eingriffsschutz von der Gehäuseöffnung ausgehend wenigstens um Fingerlänge in das Gehäuseinnere hinein erstrecken. Ein Wandabschnitt des Eingriffsschutzes kann sich von der Gehäuseöffnung in vertikaler Richtung nach unten erstrecken und kann um die Gehäuseöffnung herum umlaufend durchgehend gebildet sein. In einer Ausführungsform ist der Eingriffsschutz aus einem Glasmaterial hergestellt.

Es können Glastrinkfalschen mit transparenten Kunststoffetiketten zum Einsatz kommen. Um insbesondere ein Schmelzen der Kunststoffetiketten zu vermeiden, insbesondere an heißem Metall, kann vorgesehen sein, eine Führung und Zentrierung, die für die Glastrinkfalsche im Heizraum vorgesehen sein kann und beispielweise Führungsstäbe aufweist, aus transparenten nichtmetallischen Werkstoffen zu bilden, zum Beispiel Glas- oder Keramikwerkstoffen, beispielsweise aus Quarzglas oder Borosilikatglas. Das für infrarot transparente Material absorbiert kaum Energie und erwärmt sich infolge dessen weniger stark auf als metallische Werkstoffe. Optional können die Elemente der Führung, zum Beispiel die Führungsstäbe, aus einem Glasrohr bestehen und zusätzlich mit dem Kühlsystem verbunden, von innen durch Luft gekühlt werden.

Die Heizeinrichtung kann an eine Steuereinrichtung koppeln, die eingerichtet ist, einen Betrieb der Heizeinrichtung zu steuern. Mit Hilfe der Steuereinrichtung kann die Heizeinrichtung im Auftaubetrieb in unterschiedlichen Betriebsmodi betrieben werden. Beispielsweise kann vorgesehen sein, dass sich Betriebsmodi durch die im jeweiligen Betriebsmodus abgegebene Heizleistung unterscheiden. Als Auftauprogramm kann eine festgelegte Reihenfolge von verschiedenen Betriebsmodi ausgeführt werden, indem die Steuereinrichtung dies steuert. Darüber hinaus kann die Steuereinrichtung eingerichtet sein, die Heizeinrichtung zur Umsetzung von Sicherheitsmaßnahmen zu steuern.

An die Steuereinrichtung kann eine Sensoreinrichtung koppeln, die eingerichtet ist, zu detektieren, ob die Glastrinkflasche in dem Flaschenaufnahmeraum angeordnet ist. Die Sensoreinrichtung kann eine mechanische Sensoreinrichtung sein, beispielsweise ein Tastsensor. Ergänzend oder alternativ kann ein Berührungssensor vorgesehen sein. Eine mechanische Sensoreinrichtung mit einem Taster oder einem Mikroschalter kann vorgesehen sein, da sie in Kombination mit einer Federmechanik mehr Sicherheit bieten kann. Die zusätzliche Federeinrichtung kann die Kraft erhöhen, um einen Schalter-Mechanismus auszulösen. Eine leere Glastrinkfalsche schaltet die Heizeinrichtung nicht ein. Nur eine volle Glastrinkfaische schafft das. Unter einem bestimmten Mindestgewicht erfolgt keine Aufstauung. Dies sichert die Vorrichtung vor selbstständigem Einschalten ohne menschliches Zutun, wenn zum Beispiel ein Blatt vom Baum in die Öffnung der Vorrichtung fällt.

Die Sensoreinrichtung kann im Bodenbereich des Gehäuses angeordnet sein, zum Beispiel im Bereich der Standfläche, auf der die Glastrinkflasche angeordnet ist, wenn sie sich in dem Fiaschenaufnahmeraum zum Auftauen befindet. In Abhängigkeit von Signalen, die mit der Sensoreinrichtung erfasst werden, können das Ein- und / oder das Ausschalten der Heizeinrichtung gesteuert werden. So kann die Heizeinrichtung automatisch eingeschaltet werden, wenn die Sensoreinrichtung detektiert, dass eine Glastrinkflasche in dem Flaschenaufnahmeraum angeordnet wird. Eine ähnliche Steuerung zum Ausschalten kann vorgesehen sein, wenn detektiert wird, dass eine zuvor im Flaschenaufnahmeraum angeordnete Glastrinkflasche entnommen wird. Es kann vorgesehen sein, dass ein Einschalten der Heizeinrichtung mittels der Steuereinrichtung blockiert ist, solange die Sensoreinrichtung nicht anzeigt, dass in dem Flaschenaufnahmeraum eine Glastrinkflasche angeordnet ist.

Die Steuereinrichtung kann eingerichtet sein, ein Einschalten der Heizeinrichtung zu blockieren, wenn durch die Steuereinrichtung festgestellt wird, dass die Sensoreinrichtung für einen Zeitraum, der kürzer als ein Schwellwertzeitraum ist, anzeigt, dass keine Glastrinkflasche in dem Flaschenaufnahmeraum angeordnet ist. Bei dieser Ausführungsform kann die Steuereinrichtung überwachen, für welchen Zeitraum die Sensoreinrichtung anzeigt, dass keine Glastrinkflasche in dem Flaschenaufnahmeraum angeordnet ist. Dieses kann zum Beispiel verhindern, dass die Heizeinrichtung eingeschaltet wird, wenn eine sich im Flaschenaufnahmeraum befindliche Glastrinkflasche nur kurz angehoben und anschließend wieder abgestellt wird. Hierdurch ist vermieden, dass ein bereits aufgetautes Getränk erneut mit Wärmeenergie beaufschlagt wird, was zur ungewünschten Erhitzung des Getränks führen kann. Die Steuereinrichtung überwacht einen Mindestzeitraum, der vergehen muss, bis das Einschalten der Heizeinrichtung wieder erlaubt ist. Die Steuereinrichtung kann eingerichtet sein zu verhindern, dass eine in der Vorrichtung vergessene Glastrinkflasche unbeabsichtigt mehrfach aufgetaut wird. Um den Auftauprozess zu starten, muss die Glastrinkfalsche für eine gewisse Zeit aus der Vorrichtung entfernt oder angehoben werden. Die Steuereinrichtung kann die Energieversorgung nach einer maximalen Einschaltzeit wieder ausschalten. Dies schützt vor Überhitzung.

Die Steuereinrichtung kann an eine Detektionseinrichtung koppeln, die eingerichtet ist, das gefrorene Getränk zu bestimmen, derart, dass die Steuereinrichtung die Heizeinrichtung im Betrieb in Abhängigkeit vom Bestimmen des gefrorenen Getränks steuert. Die Detektionseinrichtung kann beispielsweise eingerichtet sein, zu bestimmen, ob das gefrorene Getränk noch durchgefroren oder schon teilweise aufgetaut ist. In Abhängigkeit hiervon können unterschiedliche Heizleistungen für den Auftaubetrieb durch die Steuereinrichtung gesteuert werden. Hierfür eignen sich zum Beispiel kontaktlose Infrarot-Thermometer, welche aus der einfallenden Infrarotstrahlung die Körpertemperatur ableiten können. Es kann ein Sensor vorgesehen sein, der von unten durch den Flaschenboden in die Flasche "sieht". Dies hat den Vorteil, dass auch während des Heizbetriebs die Temperatur im Getränk überwacht werden kann, ohne dass die von der Seite strahlenden Wärmestrahler den Sensor blenden oder negativ beeinflussen. Je nach Körpertemperatur des Getränks können so die Heizleistung und die Heizdauer dem Auftauobjekt angepasst werden. Verschiedene Flaschengrößen (Massen) und Temperaturen sind problemlos mit gleichbleibender Qualität auftaubar. Gleichbleibende Qualität im hier verwendeten Sinne bedeutet beispielsweise, dass sich die optional in der Glastrinkflasche befindlichen Eiswürfel nach dem Auftauen frei in der Flasche bewegen können. Zu viel Wärme würde auch die Eiswürfel in der Flasche schmelzen. Nur die Flüssigkeit soll in diesem Beispiel aufgetaut werden, das Wassereis soll fest bleiben.

Eine weitere Schutzeinrichtung, die in Verbindung mit der Steuereinrichtung implementierbar ist, kann im Falle eines Platzens der Glastrinkflasche in der Vorrichtung oder bei einsetzendem Regen die Leistungselektronik abschalten, bevor die Flüssigkeit nach unten in die Elektronik läuft und gefährliche Kurzschlüsse auslösen kann. Hierzu kann mittels einer Leiterplatte unterhalb des Flaschenbodens ein Sensor platziert werden. Der Sensor kann vergoldete Leiterbahnabschnitte aufweisen, welche wie zwei Kämme ineinandergreifend verschiedene Spannungspotentiale im für den Menschen ungefährlichen Niederspannungsbereich aufweisen. Die vergoldeten Oberflächen der Kämme sorgen bedingt durch ihre guten Eigenschaften bezüglich Korrosion und Oxidation dafür, dass die Oberfläche immer elektrisch leitend bleibt. Für die Kämme sind aber auch andere metallische Werkstoffe geeignet. Austretende Flüssigkeit fliegt bedingt durch die Schwerkraft nach unten und löst durch Kontakt mit dem Sensor einen Kurzschluss zwischen den Kämmen aus. Die Kämme werden durch die elektrisch leitende Flüssigkeit an einer oder mehreren Stellen miteinander verbunden. Da die Flüssigkeit zuerst über den Sensor läuft, erfolgt die Abschaltung sehr schnell. Bei geeigneter Optimierung kann so gewährleistet werden, dass die Energieversorgung abgeschaltet ist, bevor die Flüssigkeit Lüfter und kritische Bereiche der Elektronik erreicht. Der Kurzschluss wird durch eine elektronische Steuereinrichtung detektiert und führt zum Abschalten der Leistungselektronik, beispielsweise mittels Relais. Alternativ kann auch der Kurzschluss genutzt werden, um die Versorgungsspannung der Relais zusammenbrechen zu lassen, was mit einem Ausschalten der Relais einhergeht. Hierbei muss beachtet werden, dass die Vorrichtung, die die Versorgungskleinspannug für die Kämme und die Relais bereitstellt, auch kurzschlussfest/sicher ist.

Ein weiterer Temperatursensor kann den Innenraum im Kühlsystem überwachen und so Störungen im Kühlsystem durch blockierende oder defekte Lüfter oder verstopfte Lufteinlässe detektieren und die ganze Maschine vor dem Überhitzen abschalten. Steigt die Temperatur im inneren des Kühlsystems oder im Bereich der Elektronik über einen definierten Grenzwert, beispielsweise 40°C, kann eine Notabschaltung erfolgen.

Die Vorrichtung kann über eine Nulldurchgangserkennung zur Verbesserung der EMV-Eigenschaften, speziell zur Vermeidung von netz- und geräteschädlichen EMV-Belastungen, und zur Verhinderung von Flackereffekten beim Dimmen der Leistung verfügen. Ein Erkennungssystem kann jeden einzelnen Nulldurchgang des 50Hz-Wechselstromnetzes bestimmen und somit ideale Ansteuerpunkte zum Ansteuern des Dimmers liefern. Werden Dimmer im Nulldurchgang an- und ausgeschaltet, können hinsichtlich der EMV auftretende Störungen minimiert werden. Die Erkennung der Nulldurchgänge bringt zusätzlich den großen Vorteil, dass Flackereffekte vermieden bzw. deutlich reduziert werden können. Die Flackereffekte sind auf Phasenverschiebungen und nicht netzsynchrones Schalten von Dimmern, die im Nulldurchgang schalten, zurückzuführen. So kann es vorkommen, dass alle n Schaltvorgänge der passende Schaltzeitpunkt verpasst wird und die Halbwelle fälschlicherweise nicht durchgeschaltet wurde. Dieser Effekt ist mit einer wesentlich geringeren Frequenz von wenigen Hz sichtbar und deshalb besonders störend.

Die Vorrichtung kann eine Temperatur-Schmelzsicherung als weiteren Schutz vor Überhitzung aufweisen, die die Stromzufuhr dauerhaft unterbricht. Steigt die Temperatur des Innenraums über einen Schwellenwert, wird die Temperatur-Schmelzsicherung dauerhaft ausgelöst.

Es kann ein Sicherheitsmerkmal in Form einer Netzkabelzwangstrennung vorgesehen sein, die es notwendig macht, beim Demontieren des Gehäuses das Netzanschlusskabel abzutrennen. Die Abdeckung des Gehäuses kann über einen Ausbruch verfügen, welcher es notwendig macht, das Netzkabel abzuziehen, um das Gehäuse in der einzig möglichen Demontagerichtung entfernen zu können. Das Netzanschlusskabel in der Netzsteckerbuchse kann die Demontage der Abdeckung des Gehäuses mechanisch blockieren.

Die Vorrichtung kann ein System zur Anpassung der Heizleistung bei einem Kaltstart (mit kalten Wärmestrahlern) der Vorrichtung zum Vermeiden von Netzüberlastungen aufweisen. Ein (zusätzlicher) Dimmer kann eine Überlastung des Stromnetzes beim Kaltstart verhindern.

Der elektrische Widerstand der Wärmestrahler ist temperaturabhängig und im kalten Zustand geringer als im warmen. Im kalten Zustand sind alle Wärmestrahler leitfähiger als im Dauerbetrieb im warmen Zustand, weshalb ein unzulässig hoher Anfangsstrom fließen kann, welcher das Stromnetz kurzfristig überlasten kann. Bereits nach einigen Sekundenbruchteilen erwärmen sich die Wärmestrahler und die Heizleistung nimmt deutlich ab. Je mehr Wärmestrahler gleichzeitig betrieben werden, desto ausgeprägter wird der Einfluss auf das Stromnetz. Untermittelbar nach dem Einschaltvorgang sorgt der Dimmer für eine deutlich reduzierte Leistung durch Dimmen der Heizleistung. Dies kann beispielsweise durch ein Halbleiterrelais erfolgen, welches periodisch ein- und ausgeschaltet wird, so dass im zeitlichen Mittel weniger Energie fließt und somit der Mittelwert der Leistung deutlich reduziert wird. Das Halbleiterrelais kann zur Kühlung mit einem Kühlkörper verbunden sein, welcher durch die Luftfördereinrichtung belüftet wird. Nach kurzer Zeit (beispielsweise einer Sekunde) kann die Leistung auf das Normalmaß erhöht werden, da die Wärmestrahler ausreichend erwärmt wurden. Die Dauer der Aufwärmphase hängt insbesondere von Faktoren wie dem prozentualen Anteil der reduzierten Leistung (Dimmung) und den Leitwerten der Wärmestrahler im kalten Zustand ab und muss einmalig an die verwendeten Wärmestrahler angepasst werden. Alternativ zum Einsatz eines Dimmers kann auch ein zeitlich versetztes Anschalten der Wärmestrahler durchgeführt werden.

Die Vorrichtung kann über ein System zur Anpassung der Heizleistung beim Überhitzen der Vorrichtung zur Vermeidung von Zwangs-Abkühlphasen verfügen. Mittels eines Dimmers, beispielsweise des Halbleiterrelais, kann die Heizleistung im Betrieb variiert werden. Durch periodisches Ein- und Ausschalten fließt im zeitlichen Mittel weniger Energie, weshalb sich der Mittelwert der Leistung deutlich reduzieren lässt. Dies kann vorgesehen sein, wenn sich im Dauerbetrieb die Verlustleistung durch den Lüfter nicht mehr ausreichend schnell abführen lässt. Um beim Überschreiten kritischer Temperaturen eine Abkühlphase zu vermeiden, kann die Heizleistung schon vorher reduziert werden, und die Vorrichtung kann ohne Wartepausen dauerhaft und durchgehend benutzt werden.

Es kann eine software-basierte Steuerung der Heizleistung vorgesehen sein, die die Temperaturen im Innenraum des Gehäuses erfasst. Übersteigt die Temperatur im Innenraum des Gehäuses einen oder mehrere Schwellenwerte, kann die Heizleistung reduziert werden. Die Steuerung erfasst mittels Integration der zugeführten Heizleistung über die Zeit die bereits zugeführte Energiemenge in Abhängigkeit von der Anzahl der defekten Wärmestrahler und dem Dimmfaktor δ. Die zugeführte Energie kann sich nach der folgenden Formel berechnen

$$E = \int_0^{t_e}(P_W \times n_W \times \delta(\Delta\vartheta) - P_V(\Delta\vartheta)) \times \mathrm{d}t \qquad (1)$$

Hierbei ist E die dem Getränk zugeführte Energiemenge, $P_W$ die Leistung pro Wärmestrahler, t, die Auftauzeit, $n_W$ die Anzahl der funktionierenden Wärmestrahler, der Dimmfaktor $\delta$ die Leistungsanpassung des Dimmers in Prozent von der maximalen Leistung, $E_{-18°C}$ die benötigte Energiemenge, um ein tiefgekühltes Getränk von -18°C auf Verzehrtemperatur aufzutauen, $P_V$ die Verlustleistung durch thermische Verluste durch Abwärme im Gehäuse und $\Delta\vartheta$ die Temperaturdifferenz zwischen Umgebungstemperatur und Temperatur im Innenraum der Vorrichtung.

Die Betriebstemperatur des Innenraums des Gehäuses kann mit einem Temperatursensor erfasst werden. Die Umgebungstemperatur der Vorrichtung kann ebenfalls mittels eines weiteren Temperatursensors erfasst werden. Die Position des Sensors für die Umgebungstemperatur kann im unteren Teil des Gehäuses sein, zum Beispiel nahe einem Bodenblech.

Mit Hilfe eines Wasserablaufsystems kann die Gefahr eines Kurzschlusses verringert sein. Das Wasserablaufsystem kann eine temperaturfeste Wanne (zum Beispiel aus Aluminium) mit Ablauföffnung und wahlweise für eine Aufnahme aller wichtiger Komponenten wie den Glasröhren oder -stäben aufweisen. Das Wasserablaufsystem leitet sämtliches in der Wanne auftretende Wasser sicher über die Ablauföffnung durch eine Ablaufleitun, welche beispielsweise mittels eines Schlauchs oder eines Rohrs gebildet ist, aus dem Gehäuse.

Es kann eine Rinne vorgesehen sein, die eingerichtet ist, Wasser aufzufangen, zum Beispiel überschüssiges Wasser außerhalb der Wanne. Die Rinne kann aus einem elektrisch nichtleitenden temperaturfesten Material (zum Beispiel Polytetrafluorethylen, PTFE) bestehen. Die Rinne kann zusätzlich eine Zentriereinrichtung mittels Zentrieröffnungen für die Sockel der Wärmestrahler bilden. Das Material der Rinne ist elektrisch nichtleitend, damit Wasser, das an den Sockeln der Wärmestrahler auftritt, keinen Kurzschluss mit leitenden Teilen des Gehäuses verursachen kann. Die Sockel der Wärmestrahler können aus einer porösen Keramik gefertigt sein, welche sich mit Wasser vollsaugt und dadurch elektrisch leitend wird. Die Sockel der Wärmestrahler können beim Betrieb sehr heiß werden, weshalb die verwendeten Materialien ausreichend temperaturbeständig sind. Hierfür werden für elektrisch isolierende Teile zum Beispiel keramische Werkstoffe wie Beispielsweise Aluminiumtitanat, Aluminiumoxid, Zirkoniumoxid, Siliziumnitrid, Aluminiumsilikat oder hochtemperarurfeste technische Kunststoffe wie Polytetrafluorethylen (PTFE), Polyetheretherketon (PEEK), Polyetherketone (PEK), Perfluoralkoxy-Polymere (PFA), Polyvinylidenfluorid (PVDF), Polyethersulfon (PES), Polysulfon (PSU), Polyamidimid (PAI), Polyimid (PI) oder Polyphenylensulfon (PPSU) eingesetzt. Für elektrisch leitende Bauteile können verschiedene metallische Legierungen wie beispielsweise Edelstahl 1.4301 oder Aluminium EN AW-2007 verwendet werden.

Die Rinne kann zusätzliche definierte Abtropfpunkte aufweisen, um eventuell geführtes Wasser nur an definierten Punkten abtropfen lassen.

Federkontaktstifte können die Wärmestrahler nach deren Einführen an beiden Enden des jeweiligen Wärmestrahlers elektrisch kontaktieren. Sie können eingerichtet sein, mittels ihrer flexiblen Ausdehnbarkeit mögliche Fertigungstoleranzen und Längenänderung aufgrund von Ausdehnung der Wärmestrahler beim Betrieb auszugleichen.

Die Vorrichtung kann mittels steckbarer elektrischer Verbindungen einfach demontiert und auch wieder montiert werden. Die Wärmestrahler oder andere Komponenten können so einfach getauscht werden. Die Vorrichtung kann mit einfachen, günstigen und überall verfügbaren Werkzeugen (zum Beispiel: ein Kreuzschlitzschraubenzieher, ein Schraubendreher und eine Kombizange) komplett montiert und demontiert werden.

Die Wärmestrahler können jeweils mit Hilfe einer temperaturfesten Führung, zum Beispiel einer Metallführung, gegen Verdrehen geschützt sein.

Mittels einer jeweiligen elektronischen Schaltung wird detektiert, ob ein angeschlossener Wärmestrahler defekt ist. Mittels eines Regelalgorithmus wird die durch defekte Wärmestrahler fehlende Heizleistung ermittelt und mit Hilfe einer längeren Heizzeit kompensiert. Der Regelalgorithmus ist derart eingestellt, dass die durch die nicht defekten Wärmestrahler insgesamt zugeführte Wärmemenge konstant bleibt, unabhängig von der Anzahl der defekten Wärmestrahler, insofern eine definierte Anzahl an defekten Wärmestrahlern nicht überschritten wird. Ein akustischer Signalton kann einen Defekt eines Wärmestrahlers signalisieren. Eine Anzeige kann dem Benutzer die Position der defekten Wärmestrahler anzeigen. Wird eine definierte Anzahl an defekten Wärmestrahlern überschritten, kann der Betrieb der Vorrichtung eingestellt werden und eine Meldung über eine notwendige Wartung auf der Anzeige angezeigt werden.

Beschreibung von Ausführungsbeispielen

Im Folgenden werden weitere Ausführungsbeispiele unter Bezugnahme auf Figuren von einer Zeichnung näher erläutert. Hierbei zeigen:

Fig. 1      eine schematische Darstellung einer Anordnung mit einer Vorrichtung zum Auftauen eines gefrorenen Getränks und einer Glastrinkflasche, die das gefrorene Getränk enthält;

Fig. 2      eine schematische Darstellung der Vorrichtung aus Fig. 1 im Schnitt, wobei die Glastrinkflasche in einem Fiaschenaufnahmeraum angeordnet ist;

Fig. 3      eine weitere Abbildung der Schnittdarstellung aus Fig. 2;

Fig. 4      eine schematische Darstellung der Vorrichtung aus Fig. 1 teilweise im Schnitt und

Fig. 5      eine weitere schematische Darstellung der Vorrichtung aus Fig. 1 teilweise im Schnitt;

Fig. 6      eine weitere schematische Darstellung der Vorrichtung aus Fig. 1 teilweise im Schnitt;

Fig. 7      eine weitere schematische Darstellung der Vorrichtung aus Fig. 1 im Schnitt;

Fig. 8      eine Schnittdarstellung zur elektrischen Kontaktierung der Wärmestrahler innerhalb der Vorrichtung aus Fig. 1;

Fig. 9      eine schematische Darstellung zur Führung der Wärmestrahler zum Schutz gegen Verdrehen innerhalb der Vorrichtung aus Fig. 1;

Fig. 10     ein Schaltplan einer Schaltung zur Erkennung des Defektseins eines Wärmestrahlers innerhalb der Vorrichtung aus Fig. 1;

Fig. 11     eine schematische Darstellung von Schaltungen zur Erkennung des Defektseins mehrerer Wärmestrahler innerhalb der Vorrichtung aus Fig. 1;

Fig. 12     eine Schnittdarstellung eines Wasserablaufsystems innerhalb der Vorrichtung aus Fig. 1;

Fig. 13     eine schematische Darstellung einer Rinne zum Auffangen von Wasser innerhalb der Vorrichtung aus Fig. 1;

Fig. 14     eine Schnittdarstellung der Einbettung einer Sensoreinrichtung zur Gewichtsbestimmung innerhalb der Vorrichtung aus Fig. 1;

Fig. 15     eine schematische Darstellung eines Dimmers mit Kühlkörper innerhalb der Vorrichtung aus Fig. 1;

Fig. 16     ein Schaltplan zur Erkennung von Nulldurchgängen des Wechselstromnetzes;

Fig. 17     eine schematische Darstellung, teilweise im Schnitt, einer Temperatur-Schmelzsicherung innerhalb der Vorrichtung aus Fig. 1;

Fig. 18     eine weitere schematische Darstellung, teilweise im Schnitt, einer Temperatur-Schmelzsicherung innerhalb der Vorrichtung aus Fig. 1;

Fig. 19     eine schematische Darstellung einer Anordnung mit einer Vorrichtung zum Auftauen eines gefrorenen Getränks und einer Glastrinkflasche, die das gefrorene Getränk enthält, mit einem Infrarot-Temperatursensor teilweise im Schnitt.

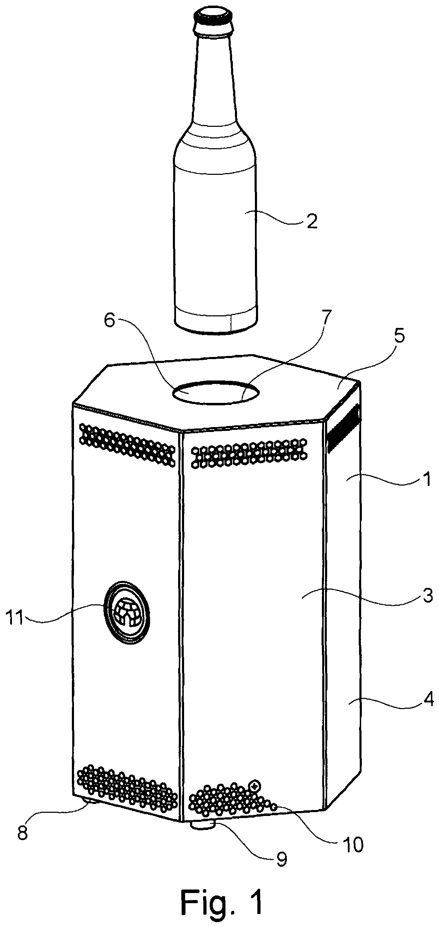

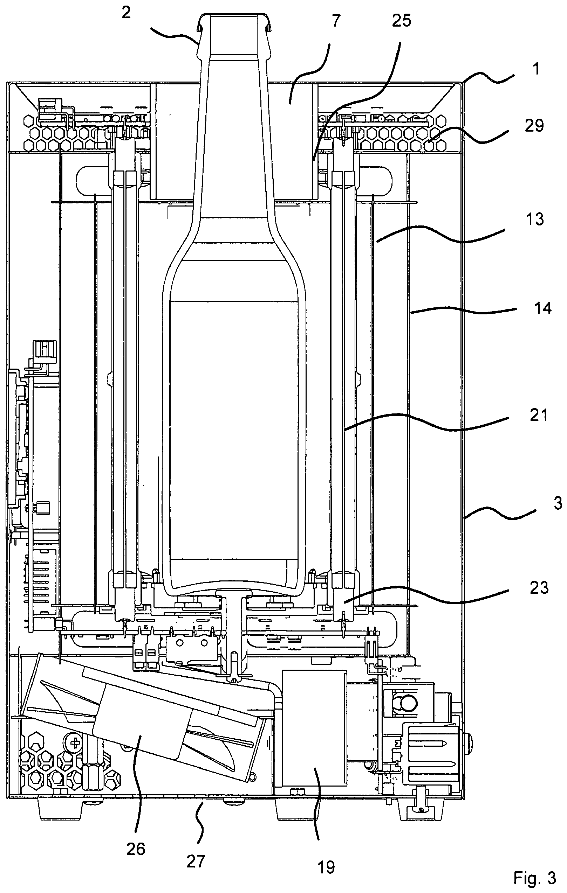

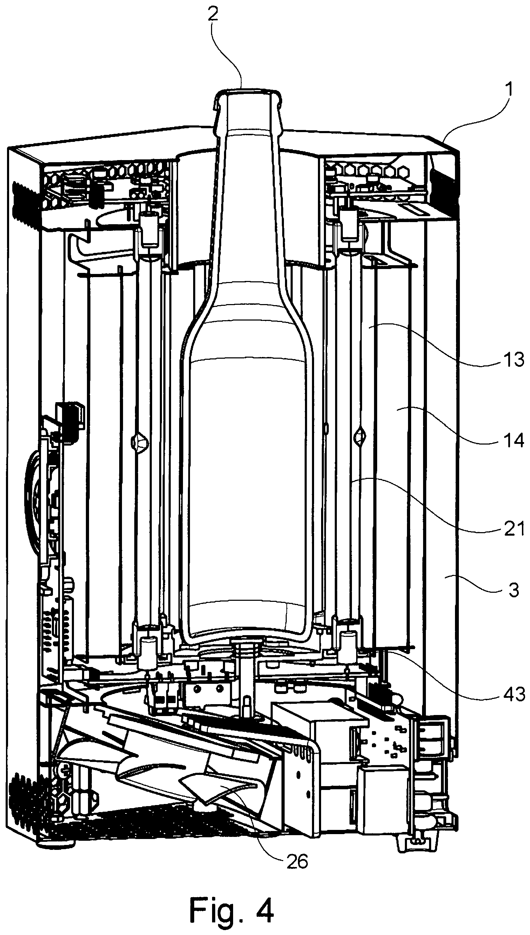

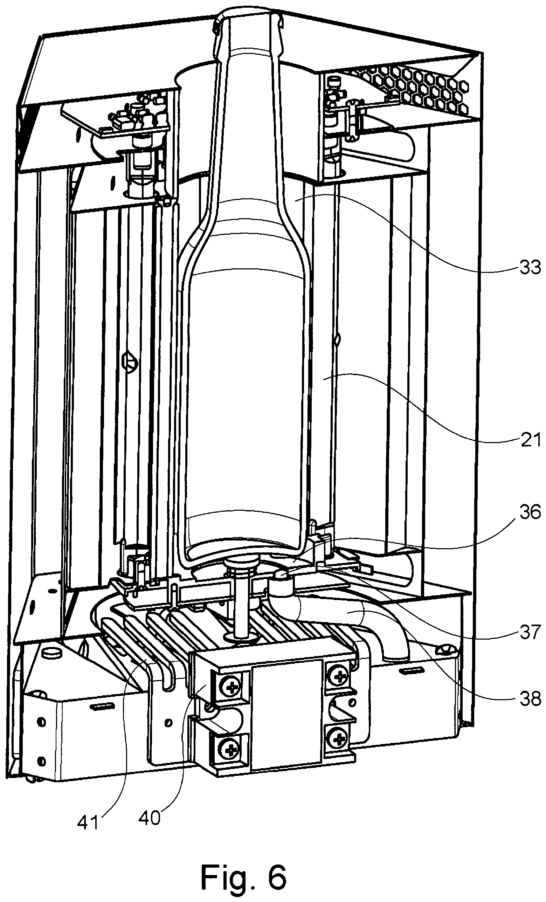

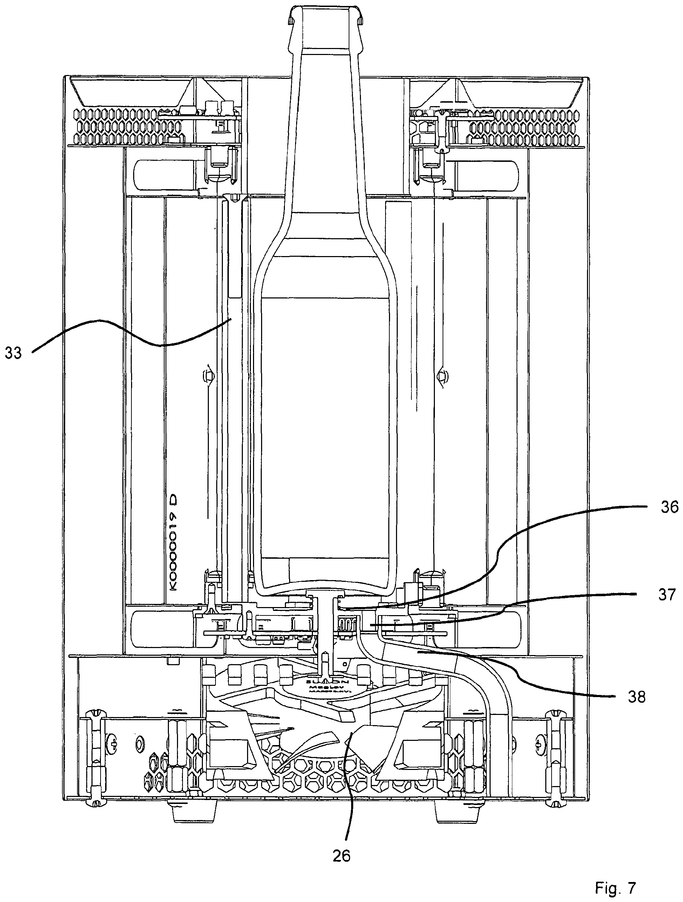

Im Folgenden werden unter Bezugnahme auf die Fig. 1 bis 19 Ausführungsbeispiele für eine Vorrichtung 1 zum Auftauen eines gefrorenen Getränks in einer Glastrinkflasche 2 beschrieben. Für gleiche Merkmale werden in den Fig. 1 bis 19 dieselben Bezugszeichen verwendet. Die Glastrinkflasche 2 kann eine handelsübliche Trinkflasche aus Glas sein, die zum Beispiel mit einem Einwegverschluss verschlossen ist, beispielweise einem Kronkorken.

Fig. 1 zeigt eine schematische Darstellung einer Anordnung mit der Vorrichtung zum Auftauen des gefrorenen Getränks sowie der Glastrinkflasche 2, die noch außerhalb eines Gehäuses 3 der Vorrichtung 1 angeordnet ist. Das Gehäuse 3 weist eine äußere Gehäusewand 4 auf. Im Bereich einer Deckwand 5 ist eine Gehäuseöffnung 6 ausgebildet, durch welche hindurch die Glastrinkflasche 2 in einen Flaschenaufnahmeraum 7 eingeführt werden kann. An dem Gehäuse 3 sind Standfüße 8, 9 in einem Bodenbereich 10 vorgesehen. Mittels einer Anzeige 11 können dem Nutzer Informationen angezeigt werden, beispielsweise betreffend eines gerade eingestellten Betriebsmodus. So kann angezeigt werden, ob der Auftaubetrieb schon begonnen hat, noch läuft und / oder schon beendet ist, beispielsweise mittels unterschiedlicher farblicher Anzeigen.

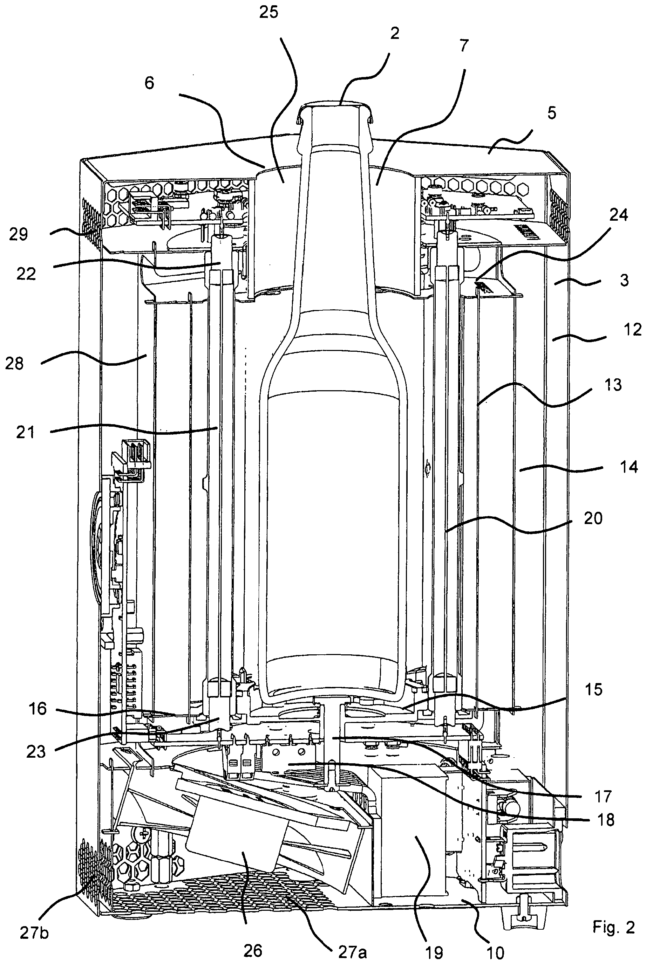

Die Fig. 2 bis 5 zeigen Schnittdarstellungen der Vorrichtung 1, wobei die Glastrinkflasche 2 in dem Flaschenaufnahmeraum 7 angeordnet ist.

Der äußeren Gehäusewand gegenüberliegend ist im Innenraum 12 des Gehäuses 3 eine Innenwand 13 angeordnet. Zwischen der Innenwand 13 und der äußeren Gehäusewand ist ein Isolierraum 14 ausgebildet, welcher der thermischen Isolierung dient. Der Isolierraum 14 kann zumindest teilweise mit einem thermisch isolierenden Material befüllt sein.

Die Glastrinkflasche 2 steht auf einer Sensoreinrichtung 17, die bei der gezeigten Ausführungsform mittels eines unteren horizontal verlaufenden Wandabschnitts 16 bereitgestellt ist. Die Sensoreinrichtung 17 weist bei der gezeigten Ausführungsform einen Taster 18 auf, weicher betätigt wird, wenn die Glastrinkflasche 2 in dem Flaschenaufnahmeraum 7 auf der Sensoreinrichtung 17 abgestellt wird. Die Sensoreinrichtung 17 koppelt an eine Steuereinrichtung 19, die ihrerseits den Betrieb einer Heizeinrichtung 20 mit mehreren Wärmestrahlern 21 steuert. Die mehreren Wärmestrahler 21 sind um den Flaschenaufnahmeraum 7 herum angeordnet und geben im Auftaubetrieb Wärmestrahlung direkt auf die Glastrinkflasche 2 ab, um das darin angeordnete gefrorene Getränk aufzutauen. Elektrische Anschluss- oder Kontaktbereiche 22, 23, zum Beispiel in Form von Sockeln, sind mittels des unteren horizontalen Wandabschnitts 16 sowie eines oberen horizontalen Wandabschnitts räumlich getrennt von dem Flaschenaufnahmeraum 7.

Zwischen einem oberen horizontalen Wandabschnitt 24 und der Gehäuseöffnung 6 erstreckt sich ein Eingriffsschutz 25, der zum Beispiel aus einem Glasmaterial besteht und verhindert, dass der Nutzer beim Einstellen oder beim Herausnehmen der Glastrinkflasche 2 unbeabsichtigt mit den Wärmestrahlern 21 und dem elektrischen Anschluss- und Kontaktbereich 22, 23 in Kontakt kommt.

Die Vorrichtung 1 weist eine thermische Isolier- und Kühleinrichtung auf, die mit einer Luftfördereinrichtung 26 gebildet ist, die bei der dargestellten Ausbildungsform als Ventilator ausgeführt ist. Die Luftfördereinrichtung 26 saugt durch Lufteingänge 27a, 27b, die bei der Ausführungsform bodenseitig und wandseitig gebildet sind, Luft in eine Luftführung 28, die sich zu einem Luftausgang 29 hin erstreckt. Die Luftführung 28 führt hierbei die Kühlluft an den elektrischen Kontakt- oder Anschlussbereichen 23 vorbei, sowie durch den thermischen Isolierraum 14 und vorbei an den elektrische Kontakt- und Anschlussbereichen 22 zum Luftausgang 29 hin, welcher bei der gezeigten Ausführung in einem Seitenwandabschnitt mittels Durchbrüchen gebildet ist.

Beim Einführen und Entnehmen wird die Glastrinkflasche 2 mittels einer Flaschenführung 32 geführt, die im gezeigten Beispiel mit Glasröhren oder -stäben 33 gebildet ist, welche umlaufend beabstandet angeordnet sind.

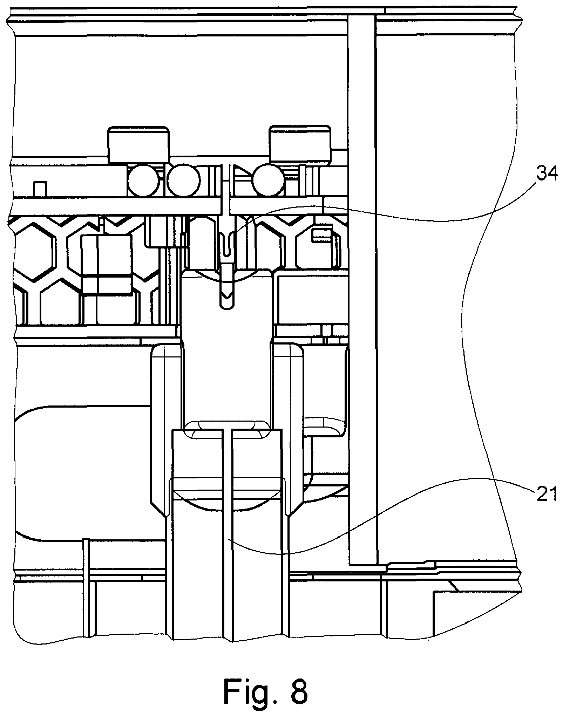

Federkontaktstifte 34 kontaktieren die Wärmestrahler 21 an beiden Enden des jeweiligen Wärmestrahlers 21 elektrisch. Sie können eingerichtet sein, mittels ihrer flexiblen Ausdehnbarkeit mögliche Fertigungstoleranzen und Längenänderung aufgrund von Ausdehnung der Wärmestrahler 21 beim Betrieb auszugleichen (Fig. 8). Die Vorrichtung 1 kann mittels steckbarer elektrischer Verbindungen einfach demontiert und auch wieder montiert werden. Die Wärmestrahler 21 oder andere Komponenten können so einfach getauscht werden. Die Vorrichtung 1 kann mit einfachen, günstigen und überall verfügbaren Werkzeugen (zum Beispiel: ein Kreuzschlitzschraubenzieher, ein Schraubendreher und eine Kombizange) komplett montiert und demontiert werden.

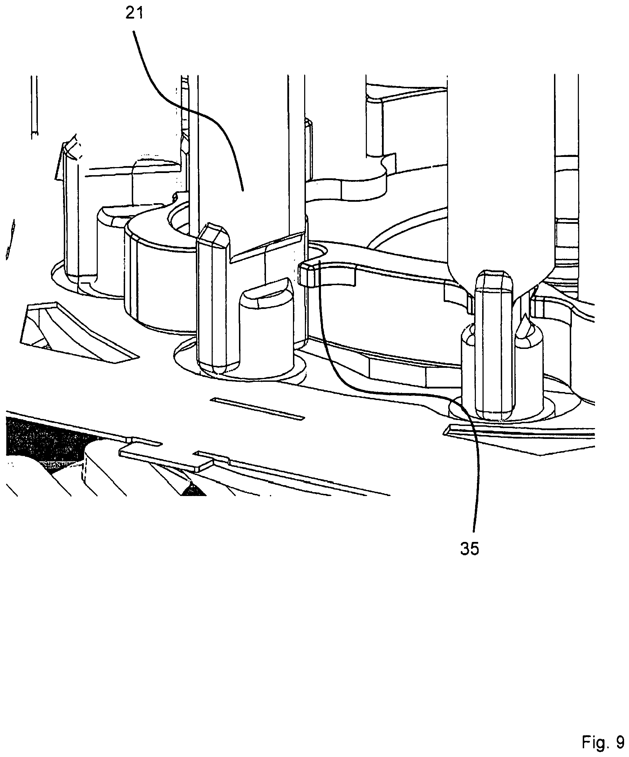

Die Wärmestrahler 21 sind jeweils mit Hilfe einer temperaturfesten Führung 35, zum Beispiel einer Metallführung, gegen Verdrehen geschützt (Fig. 9). Ein Verdrehen der Wärmestrahler 21, die mit einer weißen hochreflektierenden Keramik beschichtet sein können, kann im Betrieb problematisch sein, da die Strahlungsenergie auf die Glastrinkflasche 2 im Zentrum der Vorrichtung 1 zu richten ist. Werden die Wärmestrahler 21 gegenüber der die Strahlungsenergie bündelnden Position verdreht, sinkt der Wirkungsgrad und die Energie muss über das Gehäuse 3 zusätzlich als Verlustleistung abgeführt werden.

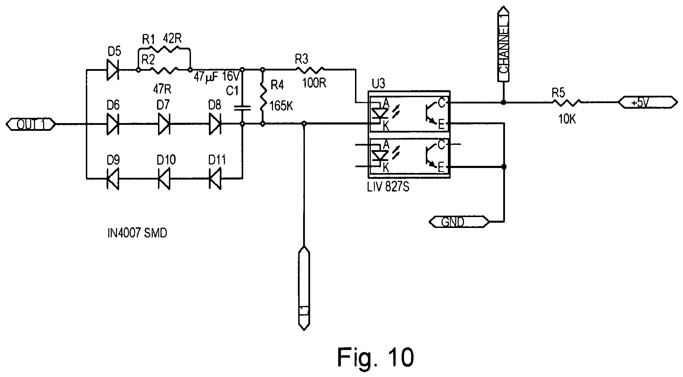

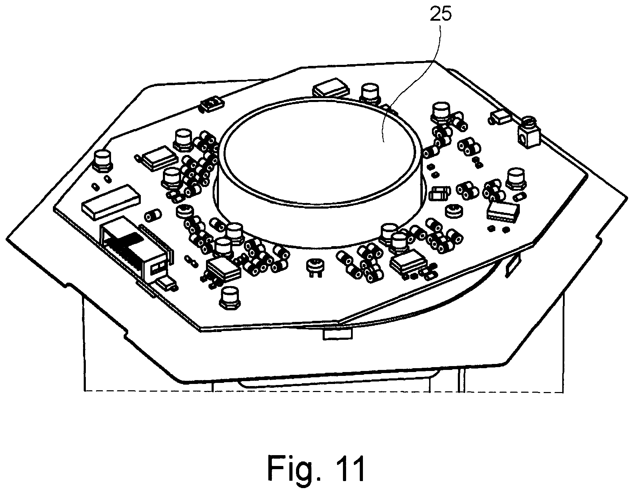

Mittels einer jeweiligen elektronischen Schaltung (vgl. Fig. 10, Fig. 11) wird detektiert, ob ein angeschlossener Wärmestrahler 21 defekt ist. Ein Wärmestrahler 21 wird an OUT1 angeschlossen und mit N verbunden. L1 wird mit 230V AC verbunden. Ist der Wärmestrahler 21 funktionsfähig, fließt ein Strom über das Dioden-Netzwerk D5-D11, was zu einer Spannungsdifferenz von etwa $3 \times 0.7V = 2.1V$ führt. Der Kondensator C5 lädt sich bei jeder positiven Halbwelle auf und treibt eine lichtemittierende Diode (LED) im Optokoppler U3. Am Ausgang Channel1 liegt eine Spannung von 0V. Ist der Wärmestrahler 21 defekt, lädt sich der Kondensator C5 nicht mehr auf, die LED im Optokoppler U3 verlischt, der Optokoppler U3 sperrt und am Ausgang Channel1 liegen 5V. Der Ausgang Channel1 ist mit einem Mikrocontroller verbunden und wird von diesem ausgewertet.

Mittels eines Regelalgorithmus wird die durch defekte Wärmestrahler 21 fehlende Heizleistung ermittelt und mit Hilfe einer längeren Heizzeit kompensiert. Der Regelalgorithmus ist derart eingestellt, dass die durch die nicht defekten Wärmestrahler 21 insgesamt zugeführte Wärmemenge konstant bleibt, unabhängig von der Anzahl der defekten Wärmestrahler 21, insofern eine definierte Anzahl an defekten Wärmestrahlern 21 nicht überschritten wird.

Ein akustischer Signalton kann einen Defekt eines Wärmestrahlers 21 signalisieren. Die Anzeige 11 kann dem Benutzer die Position der defekten Wärmestrahler 21 anzeigen. Wird eine definierte Anzahl an defekten Wärmestrahlern 21 überschritten, kann der Betrieb der Vorrichtung 1 eingestellt werden und eine Meldung über eine notwendige Wartung auf der Anzeige 11 angezeigt werden.

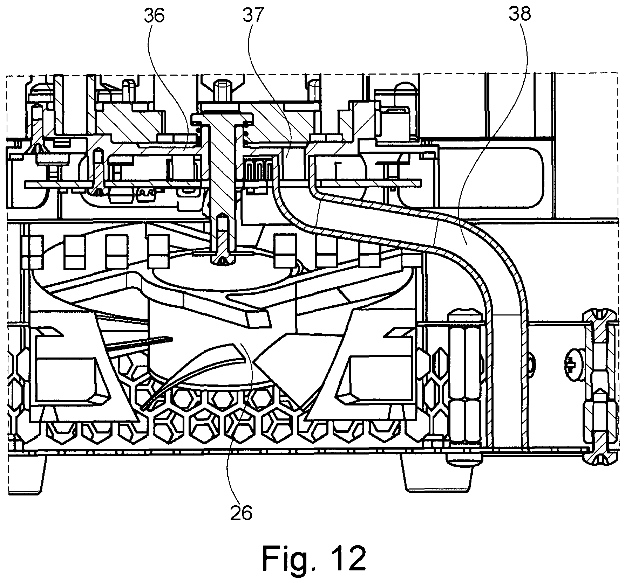

Mit Hilfe eines Wasserablaufsystems (vgl. Fig. 12) wird die Gefahr eines Kurzschlusses verringert. Das Wasserablaufsystem weist eine temperaturfeste Wanne 36 (zum Beispiel aus Aluminium) mit Ablauföffnung 37 und eine Aufnahme für alle wichtigen Komponenten wie den Glasröhren oder -stäben 33 auf. Das Wasserablaufsystem leitet sämtliches in der Wanne 36 auftretende Wasser sicher über die Ablauföffnung 37 durch eine Ablaufleitung 38, welche beispielsweise mittels eines Schlauchs oder eines Rohrs gebildet ist, aus dem Gehäuse 3.

Im unteren Teil der Vorrichtung 1 befinden sich elektrische Schaltkreise, die vor Wasser geschützt werden müssen. Das Wasser entsteht insbesondere durch vereiste tiefgekühlte Glastrinkflaschen 2. Eisschichten auf den Glastrinkflaschen 2 entstehen zum Beispiel bei einer Lagerung der Glastrinkflaschen 2 in Tiefkühlschränken und insbesondere, wenn die Türen der Tiefkühlschränke häufig geöffnet werden. Die Luftfeuchtigkeit der Umgebungsluft schlägt sich auf den Glastrinkflaschen 2 nieder und friert Schicht für Schicht fest. Die Eisschicht auf den Glastrinkflaschen 2 schmilzt beim Auftauvorgang in der Vorrichtung 1 und tropft unterhalb der Glastrinkflasche 2 ab. Bei vielen aufzutauenden Glastrinkflaschen 2 können dadurch große Mengen an Wasser entstehen, die sicher aus dem Gehäuse 3 geleitet werden müssen.

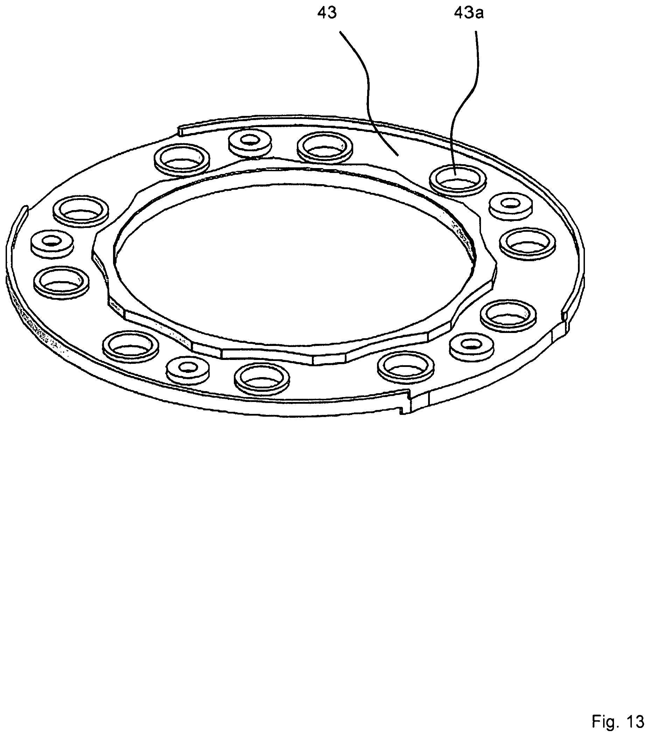

Mit Hilfe einer Rinne 43 (Fig. 13) wird übriges Wasser aufgefangen, welches außerhalb der Wanne 36 gerät. Die Rinne 43 besteht aus einem elektrisch nichtleitenden temperaturfesten Material (zum Beispiel Polytetrafluorethylen, PTFE) und bildet zusätzlich eine Zentriereinrichtung mittels Zentrieröffnungen 43a für die Sockel der Wärmestrahler 21. Das Material der Rinne 43 ist elektrisch nichtleitend, damit Wasser, das an den Sockeln der Wärmestrahler 21 auftritt, keinen Kurzschluss mit leitenden Teilen des Gehäuses 3 verursachen kann. Die Sockel der Wärmestrahler 21 können aus einer porösen Keramik gefertigt sein, welche sich mit Wasser vollsaugt und dadurch elektrisch leitend wird. Die Sockel der Wärmestrahler 21 können beim Betrieb sehr heiß werden, weshalb die verwendeten Materialien ausreichend temperaturbeständig sind. Hierfür werden für elektrisch isolierende Teile zum Beispiel keramische Werkstoffe wie beispielsweise Aluminiumtitanat, Aluminiumoxid, Zirkoniumoxid, Siliziumnitrid, Aluminiumsilikat oder hochtemperarurfeste technische Kunststoffe wie Polytetrafluorethylen (PTFE), Polyetheretherketon (PEEK), Polyetherketone (PEK), Perfluoralkoxy-Polymere (PFA), Polyvinylidenfluorid (PVDF), Polyethersulfon (PES), Polysulfon (PSU), Polyamidimid (PAI), Polyimid (PI) oder Polyphenylensulfon (PPSU) eingesetzt. Für elektrisch leitende Bauteile können verschiedene metallische Legierungen wie beispielsweise Edelstahl 1.4301 oder Aluminium EN AW-2007 verwendet werden.

Die Rinne 43 weist zusätzliche definierte Abtropfpunkte auf, um eventuell geführtes Wasser nur an definierten Punkten abtropfen lassen.

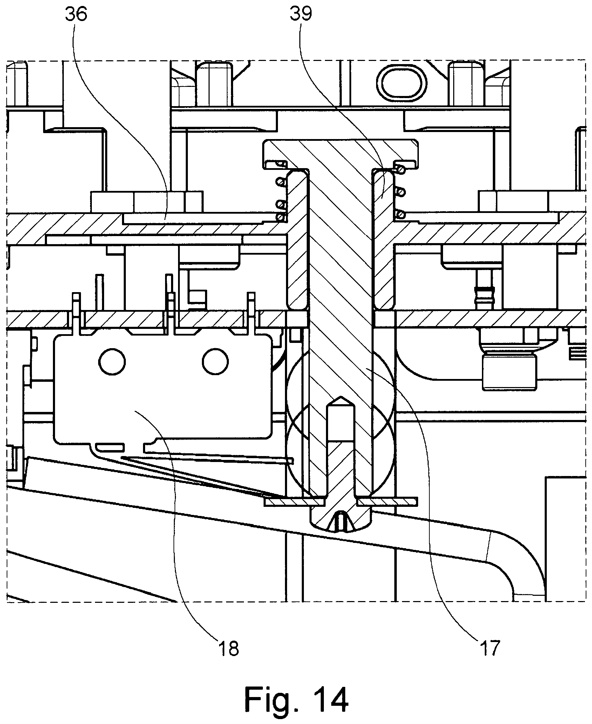

Mittels der Sensoreinrichtung 17 wird am Gewicht der Glastrinkflasche 2 erkannt, ob diese eingesetzt wurde, und anschließend wird der Auftaubetrieb gestartet. Leere Glastrinkflaschen 2 werden aufgrund ihres geringen Gewichts erkannt. Dann wird der Auftaubetrieb nicht gestartet. Die Einbettung der Sensoreinrichtung 17 ist wasserdicht ausgeführt (Fig.14). Auftretendes Kondenswasser oder ähnliche Flüssigkeiten können nicht entlang der Sensoreinrichtung 17 in den Unterteil des Gehäuses 3 fließen. Die Sensoreinrichtung 17 ist mittels eines Sockels 39 gegenüber der Wanne 36 erhöht montiert, wodurch kein Wasser in die Führungsstange der Sensoreinrichtung 17 gelangen kann.

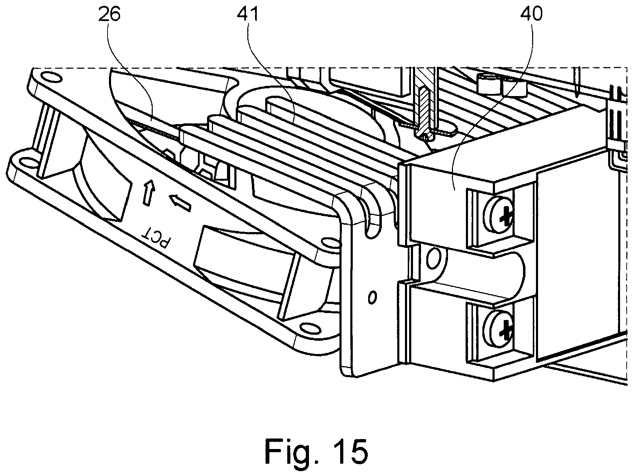

Die Vorrichtung 1 weist ein System zur Anpassung der Heizleistung bei einem Kaltstart (mit kalten Wärmestrahlern 21) der Vorrichtung 1 zum Vermeiden von Netzüberlastungen auf (Fig. 15). Ein zusätzlicher Dimmer verhindert eine Überlastung des Stromnetzes beim Kaltstart. Der elektrische Widerstand der Wärmestrahler 21 ist temperaturabhängig und im kalten Zustand geringer als im warmen. Im kalten Zustand sind alle Wärmestrahler 21 leitfähiger als im Dauerbetrieb im warmen Zustand, weshalb ein unzulässig hoher Anfangsstrom fließen kann, welcher das Stromnetz kurzfristig überlasten kann. Bereits nach einigen Sekundenbruchteilen erwärmen sich die Wärmestrahler 21 und die Heizleistung nimmt deutlich ab. Die von den Leuchtmittel-Herstellern bezifferten Angaben zur Heizleistung beziehen sich immer auf den Dauerbetrieb im warmen Zustand und nicht den Einschaltvorgang. Je mehr Stäbe gleichzeitig betrieben werden, desto ausgeprägter wird der Einfluss auf das Stromnetz. Untermittelbar nach dem Einschaltvorgang sorgt der Dimmer für eine deutlich reduzierte Leistung durch Dimmen der Heizleistung. Dies kann beispielsweise durch ein Halbleiterrelais 40 erfolgen (vgl. Fig. 15), welches periodisch ein- und ausgeschaltet wird, so dass im zeitlichen Mittel weniger Energie fließt und somit der Mittelwert der Leistung deutlich reduziert wird. Das Halbleiterrelais 40 ist zur Kühlung mit einem Kühlkörper 41 verbunden, welcher durch die Luftfördereinrichtung 26 belüftet wird. Nach kurzer Zeit (beispielsweise einer Sekunde) kann die Leistung auf das Normalmaß erhöht werden, da die Wärmestrahler 21 ausreichend erwärmt wurden. Die Dauer der Aufwärmphase hängt insbesondere von Faktoren wie dem prozentualen Anteil der reduzierten Leistung (Dimmung) und den Leitwerten der Wärmestrahler 21 im kalten Zustand ab und muss einmalig an die verwendeten Wärmestrahler 21 angepasst werden. Alternativ zum Einsatz eines Dimmers kann auch ein zeitlich versetztes Anschalten der Wärmestrahler 21 durchgeführt werden.

Die Vorrichtung 1 verfügt über ein System zur Anpassung der Heizleistung beim Überhitzen der Vorrichtung 1 zur Vermeidung von Zwangs-Abkühlphasen. Mittels eines Dimmers, beispielsweise des Halbleiterrelais 40, kann die Heizleistung im Betrieb variiert werden. Durch periodisches Ein- und Ausschalten fließt im zeitlichen Mittel weniger Energie, weshalb sich der Mittelwert der Leistung deutlich reduzieren lässt. Dies ist notwendig, wenn sich im Dauerbetrieb die Verlustleistung durch den Lüfter 26 nicht mehr ausreichend schnell abführen lässt. Um beim Überschreiten kritischer Temperaturen eine Abkühlphase zu vermeiden, kann die Heizleistung schon vorher reduziert werden und die Vorrichtung 1 kann ohne lästige Wartepausen dauerhaft und durchgehend benutzt werden. Dies bietet dem Benutzer einen Mehrwert und bringt eine gesteigerte Benutzerfreundlichkeit der Vorrichtung 1 mit sich.

Eine Software steuert die Heizleistung und erfasst die Temperaturen im Innenraum 12 des Gehäuses 3. Übersteigt die Temperatur im Innenraum 12 des Gehäuses 3 einen oder mehrere Schwellenwerte, kann die Heizleistung reduziert werden. Die Software erfasst mittels Integration der zugeführten Heizleistung über die Zeit die bereits zugeführte Energiemenge in Abhängigkeit von der Anzahl der defekten Wärmestrahler 21 und dem Dimmfaktor $\delta$. Die zugeführte Energie errechnet sich nach der Formel

$$E = \int_0^{t_e} (P_W \times n_W \times \delta(\Delta\vartheta) - P_V(\Delta\vartheta)) \times \mathrm{d}t \qquad (1)$$

Hierbei ist $E$ die dem Getränk zugeführte Energiemenge, $P_W$ die Leistung pro Wärmestrahler 21, $t_e$ die Auf-

tauzeit, $n_W$ die Anzahl der funktionierenden Wärmestrahler 21, der Dimmfaktor $\delta$ die Leistungsanpassung des Dimmers in Prozent von der maximalen Leistung, $E_{-18°C}$ die benötigte Energiemenge, um ein tiefgekühltes Getränk von -18°C auf Verzehrtemperatur aufzutauen, $P_V$ die Verlustleistung durch thermische Verluste durch Abwärme im Gehäuse 3 und $\Delta\vartheta$ die Temperaturdifferenz zwischen Umgebungstemperatur und Temperatur im Innenraum 12 der Vorrichtung 1.

Die Auftauzeit ergibt sich in Abhängigkeit von den in Formel (1) auftretenden Größen. Die Auftauzeit ist beispielsweise erreicht, wenn die zugeführte Energie $E$ gleich der benötigten Energie $E_{-18°C}$ entspricht. Der Dimmfaktor $\delta$ kann Werte zwischen 0 und 1 annehmen. Bei voller Ansteuerung des Dimmers beträgt $\delta=1$, was der vollen Heizleistung von 100% entspricht. Die Reduzierung der Leistung $P_W$ sowie der Ausfall von Wärmestrahlern 21 (Abnahme von $n_W$) verlängert die benötigte Auftauzeit. Im kalten Zustand der Vorrichtung 1 fließt ein großer Teil der zugeführten Heizenergie dem Gehäuse zu, um es auf Betriebstemperatur aufzuwärmen. Dies muss in der Berechnung berücksichtigt werden.

Die Betriebstemperatur des Innenraums 12 des Gehäuses 3 wird mit einem Temperatursensor erfasst. Die Umgebungstemperatur der Vorrichtung 1 wird ebenfalls mittels eines weiteren Temperatursensors erfasst. Die Position des Sensors für die Umgebungstemperatur wurde in den unteren Teil des Gehäuses 3 verlegt, zum Beispiel nahe dem Bodenblech 10. Dies hat den Grund, dass an anderen Messpunkten eine Erwärmung durch die Heizeinrichtung 20 stattfindet und dadurch die Messergebnisse verfälscht werden können. Je heißer die Vorrichtung 1 wird, desto geringer wird der Einfluss von $P_V$, da das Gehäuse 3 nun selbst Energie abstrahlt und das Getränk zusätzlich mit der eigentlichen Verlustleistung erwärmt. Der Wert von $P_V$ wird über die Temperaturen im Innenraum 12 bezogen auf die Umgebungstemperatur bestimmt. Der Dimmfaktor $\delta$ wird aus der Umgebungstemperatur, der Temperatur des Innenraums 12 und der Anzahl der funktionsfähigen Wärmestrahler 21 bestimmt. Steigt die Temperatur im Innenraum 12 zu stark an, erfolgt die Leistungsreduzierung.

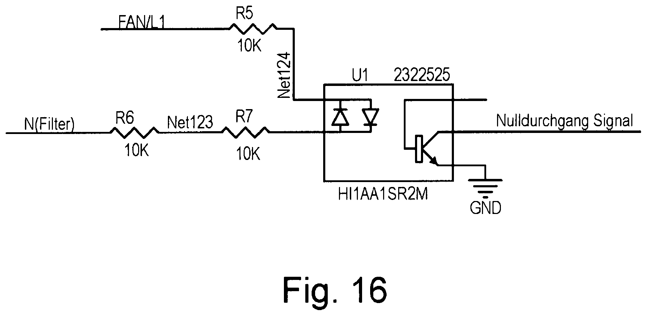

Die Vorrichtung 1 verfügt über eine Nulldurchgangserkennung (exemplarische Schaltung mit dem Baustein H11AA1 in Fig. 16) zur Verbesserung der EMV-Eigenschaften, speziell zur Vermeidung von netz- und geräteschädlichen EMV-Belastungen, und zur Verhinderung von Flackereffekten beim Dimmen der Leistung. Ein Erkennungssystem identifiziert jeden einzelnen Nulldurchgang des 50Hz-Wechselstromnetzes und liefert somit ideale Ansteuerpunkte zum Ansteuern des Dimmers. Werden Dimmer im Nulldurchgang an- und ausgeschaltet, können hinsichtlich der EMV auftretende Störungen minimiert werden. Die Erkennung der Nulldurchgänge bringt zusätzlich den großen Vorteil, dass Flackereffekte vermieden bzw. deutlich reduziert werden können. Die Flackereffekte sind auf Phasenverschiebungen und nicht netzsynchrones Schalten von Dimmern, die im Nulldurchgang schalten, zurückzuführen. So kann es vorkommen, dass alle n Schaltvorgänge der passende Schaltzeitpunkt verpasst wird und die Halbwelle fälschlicherweise nicht durchgeschaltet wurde. Dieser Effekt ist mit einer wesentlich geringeren Frequenz von wenigen Hz sichtbar und deshalb besonders störend.

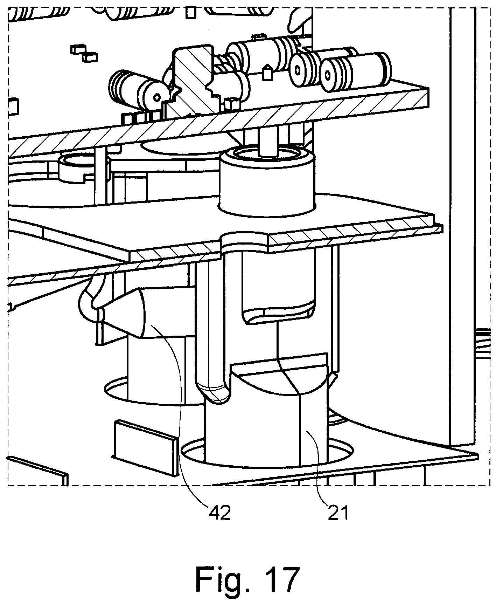

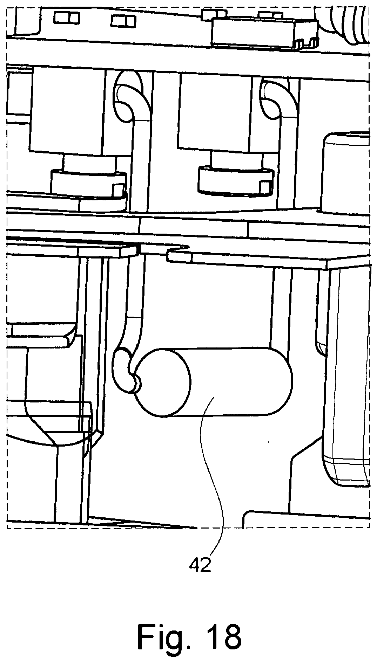

Die Vorrichtung 1 weist eine Temperatur-Schmelzsicherung 42 als weiteren Schutz vor Überhitzung auf, die die Stromzufuhr dauerhaft unterbricht (Fig. 17, Fig. 18). Steigt die Temperatur des Innenraums 12 über einen Schwellenwert, wird die Temperatur-Schmelzsicherung 42 dauerhaft ausgelöst.

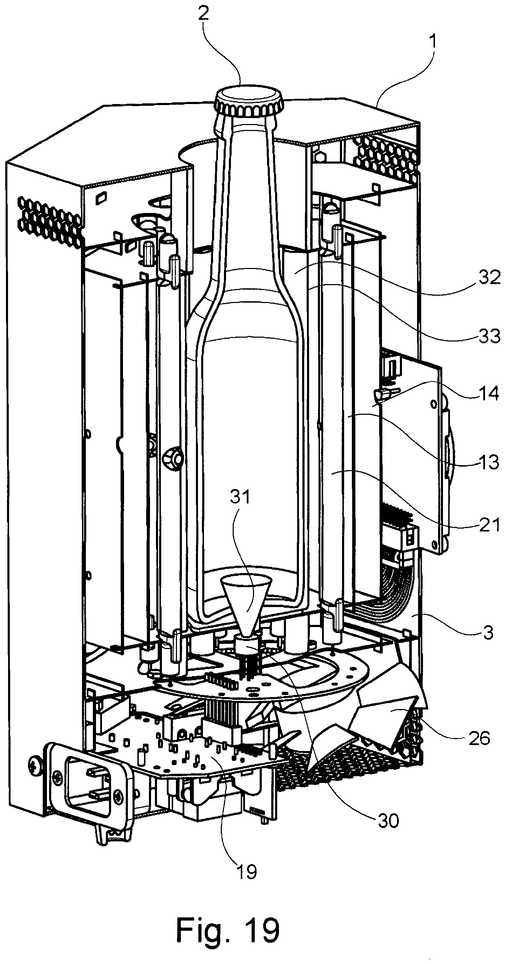

In einem weiteren Ausführungsbeispiel kann in dem Flaschenaufnahmeraum 7 oder benachbart hierzu eine Detektionseinrichtung vorgesehen sein (Fig. 19), um das gefrorene Getränk in der Glastrinkflasche zu bestimmen, beispielsweise zum Erfassen, ob das gefrorene Getränk noch im Wesentlichen durchgefroren oder teilweise aufgetaut ist. Bei der gezeigten Ausführung ist ein Infrarot-Temperatursensor 30 vorgesehen, dem ein Detektionsbereich 31 zugeordnet ist. Detektierte Signale der Detektionseinrichtung können an die Steuereinrichtung 19 gegeben werde, sodass diese in Abhängigkeit von den erfassten Signalen die Heizeinrichtung 20 im Betrieb steuert, beispielsweise hinsichtlich einer abgegebenen Heizleistung.

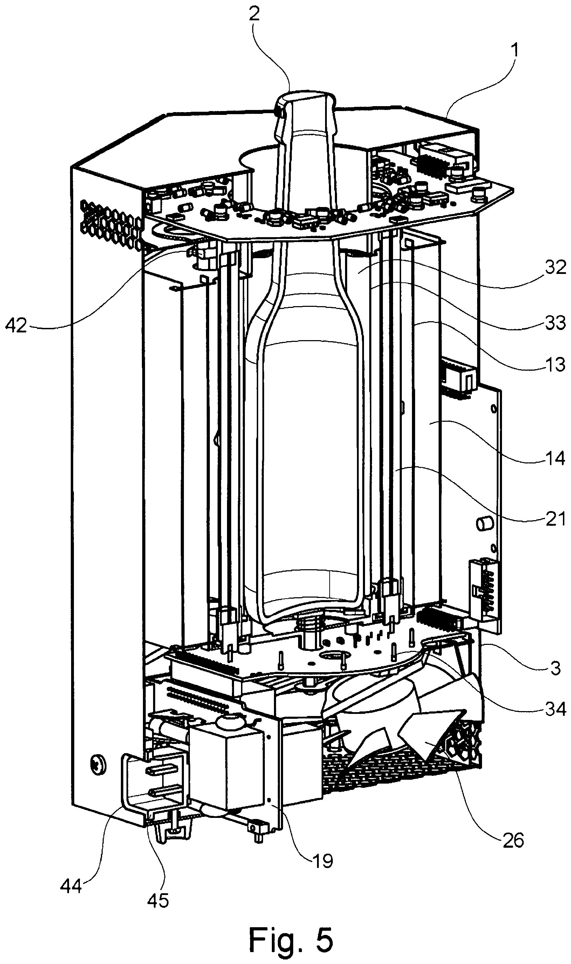

In einem weiteren Ausführungsbeispiel kann das Gerät ein Sicherheitsmerkmal in Form einer Netzkabelzwangstrennung aufweisen, die es notwendig macht, beim Demontieren des Gehäuses 3 das Netzanschlusskabel abzutrennen (Fig. 5). Die Abdeckung des Gehäuses 3 verfügt über einen Ausbruch 44, welcher es notwendig macht, das Netzkabel abzuziehen, um das Gehäuse 3 in der einzig möglichen Demontagerichtung entfernen zu können. Das Netzanschlusskabel in der Netzsteckerbuchse 45 blockiert die Demontage der Abdeckung des Gehäuses 3 mechanisch.

## Patentansprüche

1. Vorrichtung (1) zum Auftauen eines gefrorenen Getränks in einer Glastrinkflasche (2), mit:

- einem Gehäuse (3);
- einem Flaschenaufnahmeraum (7), der in dem Gehäuse (3) angeordnet und eingerichtet ist, eine Glastrinkflasche (2) mit einem gefrorenen Getränk zum Auftauen aufzunehmen;
- einer Heizeinrichtung (20), die in dem Gehäuse (3) angeordnet ist und Wärmestrahler (21) aufweist, welche um den Flaschenaufnahmeraum (7) herum angeordnet sind, um im Auftaubetrieb Wärmeenergie auf die Glastrinkflasche (2) abzustrahlen;

- einer elektronischen Schaltung, die eingerichtet ist, zu detektieren, ob mindestens einer der Wärmestrahler (21) defekt ist, und
- einer thermischen Isolier- und Kühleinrichtung, die im Gehäuse (3) angeordnet ist, die thermische Isolier- und Kühleinrichtung aufweisend:

   - einen thermisch isolierenden Raum (14), der in dem Gehäuse (3) zwischen den Wärmestrahlern (21) und einer äußeren Gehäusewand (4) sowie die äußere Gehäusewand (4) umlaufend erfassend ausgebildet ist; und
   - eine Luftkühlung, bei der mittels einer Luftfördereinrichtung (26) über einen Lufteingang (27) Kühlluft aus der Umgebung in das Gehäuse (3) gesaugt und in dem Gehäuse (3) über eine Luftführung (28) zu einem Luftausgang (29) geführt wird, wobei die Luftführung (28) zumindest den thermisch isolierenden Raum (14) erfassend ausgebildet ist, **dadurch gekennzeichnet, dass** ein Regelalgorithmus eingerichtet ist, die durch defekte Wärmestrahler (31) fehlende Heizleistung zu ermitteln und mit Hilfe einer längeren Heizzeit zu kompensieren, derart, dass die durch die nicht defekten Wärmestrahler (21) insgesamt zugeführte Wärmemenge konstant bleibt, unabhängig von der Anzahl der defekten Wärmestrahler (21), insofern eine definierte Anzahl an defekten Wärmestrahlern (21) nicht überschritten wird.

2. Vorrichtung (1) nach Anspruch 1, **dadurch gekennzeichnet, dass** die Wärmestrahler (21) von einer Innenwand (13) umgeben sind und der thermisch isolierende Raum (14) zwischen der Innenwand (13) und der äußeren Gehäusewand (4) angeordnet ist.

3. Vorrichtung (1) nach Anspruch 1 oder 2, **dadurch gekennzeichnet, dass** der thermisch isolierende Raum (14) zumindest teilweise mit einem thermisch isolierenden Material ausgefüllt ist.

4. Vorrichtung (1) nach Anspruch 3, **dadurch gekennzeichnet, dass** das die Kühlluft beim Führen entlang der Luftführung (28) das thermische isolierende Material durchströmt.

5. Vorrichtung (1) nach mindestens einem der vorangehenden Ansprüche, **dadurch gekennzeichnet, dass** die Luftführung (28) elektrische Kontakt- oder Anschlussbereiche (22, 23) Wärmestrahler (21) erfassend ausgebildet ist.

6. Vorrichtung (1) nach mindestens einem der vorangehenden Ansprüche, dadurch **ge-kennzeichnet,** dass die Luftführung (28) eine Standfläche (15), auf welcher die Glastrinkflasche (2) steht, wenn diese in dem Flaschenaufnahmeraum (7) angeordnet ist, erfassend ausgebildet ist.

7. Vorrichtung (1) nach mindestens einem der vorangehenden Ansprüche, **dadurch gekennzeichnet, dass** die Heizeinrichtung (20) eine Anordnung von Stabwärmestrahlern aufweist, die um den Flaschenaufnahmeraum (7) herum angeordnet sind.

8. Vorrichtung (1) nach mindestens einem der vorangehenden Ansprüche, dadurch **ge-kennzeichnet,** dass an einer Gehäuseöffnung (6), über welche die Glastrinkflasche (2) in dem Flaschenaufnahmeraum (7) einführbar ist, im Gehäuse ein Eingriffsschutz (25) angeordnet ist.

9. Vorrichtung (1) nach mindestens einem der vorangehenden Ansprüche, dadurch **ge-kennzeichnet,** dass die Heizeinrichtung (20) an eine Steuereinrichtung (19) koppelt, die eingerichtet ist, einen Betrieb der Heizeinrichtung (20) zu steuern.

10. Vorrichtung (1) nach Anspruch 9, **dadurch gekennzeichnet, dass** an die Steuereinrichtung (19) eine Sensoreinrichtung (17) koppelt, die eingerichtet ist, zu detektieren, ob die Glastrinkflasche (2) in dem Flaschenaufnahmeraum (7) angeordnet ist.

11. Vorrichtung (1) nach Anspruch 9 oder 10, **dadurch gekennzeichnet, dass** die Steuereinrichtung (19) eingerichtet ist, ein Einschalten der Heizeinrichtung (20) zu blockieren, wenn durch die Steuereinrichtung (19) festgestellt wird, dass die Sensoreinrichtung (17) für einen Zeitraum, der kürzer als ein Schwellwertzeitraum ist, anzeigt, dass keine Glastrinkflasche (2) in dem Flaschenaufnahmeraum (7) angeordnet ist.

12. Vorrichtung (1) nach mindestens einem der Ansprüche 9 bis 11, dadurch **gekenn- zeichnet,** dass an die Steuereinrichtung (19) eine Detektionseinrichtung koppelt, die eingerichtet ist, das gefrorene Getränk zu bestimmen, derart, dass die Steuereinrichtung (19) die Heizeinrichtung (20) im Betrieb in Abhängigkeit vom Bestimmen des gefrorenen Getränks steuert.

13. Verfahren zum Auftauen eines gefrorenen Getränks in einer Glastrinkflasche, bei dem eine Vorrichtung (1) nach mindestens einem der vorangehenden Ansprüche bereitgestellt wird, eine Glastrinkflasche (2) in einem Flaschenaufnahmeraum (7) in einem Gehäuse (3) der Vorrichtung (1) angeordnet wird und das gefrorene Getränk in der Glastrinkflasche (2) aufgetaut wird.

**Claims**

1. A device (1) for thawing a frozen drink in a glass drinking bottle (2), with:

   - a housing (3);
   - a bottle receiving space (7), which is arranged in the housing (3) and which is configured to receive a glass drinking bottle (2) with a frozen drink for thawing;
   - a heating means (20), which is arranged in the housing (3) and has radiant heaters (21), which are arranged around the bottle receiving space (7) in order to radiate heat energy onto the glass drinking bottle (2) during the thawing operation;
   - an electronic circuit, which is configured to detect whether at least one of the radiant heaters (21) is defective,
   - a thermal insulating and cooling means, which is arranged in the housing (3), the thermal insulating and cooling means having:

      - a thermally insulating space (14), which is formed in the housing (3) between the radiant heaters (21) and an outer housing wall (4) and so as to circumferentially encompass the outer housing wall (4); and
      - an air cooling, in the case of which cooling air is drawn from the surrounding area into the housing (3) by means of an air conveying means (26) via an air inlet (27) and is conducted in the housing (3) via an air duct (28) to an air outlet (29), wherein the air duct (28) is formed so as to encompass at least the thermally insulating space (14);

   **characterized in that** a regulating algorithm is configured to determine the heating power missing due to defective radiant heaters (31) and to compensate it with the help of a longer heating time in such a way that the heat energy supplied as a whole by means of the non-defective radiant heaters (21) remains constant, independently of the number of the defective radiant heaters (21), insofar as a defined number of defective radiant heaters (21) is not exceeded.

2. The device (1) according to claim 1, **characterized in that** the radiant heaters (21) are surrounded by an inner wall (13) and the thermally insulating space (14) is arranged between the inner wall (13) and the outer housing wall (4).

3. The device (1) according to claim 1 or 2, **characterized in that** the thermally insulating space (14) is at least partly filled with a thermally insulating material.

4. The device (1) according to claim 3, **characterized in that** the cooling air flows through the thermally insulating material during the conduction along the air duct (28).

5. The device (1) according to at least one of the preceding claims, **characterized in that** the air duct (28) is formed so as to encompass electrical contact or connection regions (22, 23) radiant heaters (21).

6. The device (1) according to at least one of the preceding claims, **characterized in that** the air duct (28) is formed so as to encompass a standing surface (15), on which the glass drinking bottle (2) stands when the latter is arranged in the bottle receiving space (7).

7. The device (1) according to at least one of the preceding claims, **characterized in that** the heating means (20) has an arrangement of rod radiant heaters, which are arranged around the bottle receiving space (7).

8. The device (1) according to at least one of the preceding claims, **characterized in that** an interference protection (25) is arranged on a housing opening (6), via which the glass drinking bottle (2) is insertable in the bottle receiving space (7).

9. The device (1) according to at least one of the preceding claims, **characterized in that** the heating means (20) couples to a control means (19), which is configured to control an operation of the heating means (20).

10. The device (1) according to claim 9, **characterized in that** a sensor means (17) couples to the control means (19), which sensor means is configured to detect if the glass drinking bottle (2) is arranged in the bottle receiving space (7).

11. The device (1) according to claim 9 or 10, **characterized in that** the control means (19) is configured to block an activation of the heating means (20) when it is determined by means of the control means (19) that the sensor means (17) indicates for a time period, which is shorter than a threshold time period, that no glass drinking bottle (2) is arranged in the bottle receiving space (7).

12. The device (1) according to at least one of claims 9 to 11, **characterized in that** a detection means couples to the control means (19), which detection means is configured to determine the frozen drink in such a way that the control means (19) controls the heating means (20) during operation as a function of the determining of the frozen drink.

13. A method for thawing a frozen drink in a glass drinking bottle, in the case of which a device (1) according to at least one of the preceding claims is provided, a glass drinking bottle (2) is arranged in a bottle receiving space (7) in a housing (3) of the device (1) and the frozen drink is thawed in the glass drinking bottle (2).

**Revendications**

1. Dispositif (1) pour décongeler une boisson congelée dans une bouteille de boisson en verre (2) avec :

   - un boîtier (3),
   - un compartiment de réception de bouteille (7), qui est disposé dans le boîtier (3) et est agencé pour recevoir une bouteille de boisson en verre (2) avec une boisson congelée pour décongélation,
   - un système de chauffage (20), qui est disposé dans le boîtier (3) et comporte des éléments de chauffe radiants (21), lesquels sont disposés autour du compartiment de réception de bouteille (7) pour irradier au cours de la décongélation de l'énergie thermique sur la bouteille de boisson en verre (2),
   - un circuit électronique, qui est agencé pour détecter, si au moins un des éléments de chauffe radiants (21) est défectueux, et
   - un système d'isolation et de refroidissement thermique, qui est disposé dans le boîtier (3), le système d'isolation et de refroidissement thermique comportant :

      - un compartiment thermo-isolant (14), qui est constitué dans le boîtier (3) entre les éléments de chauffe radiants (21) et une paroi de boîtier extérieure (4) et saisissant de façon périphérique la paroi de boîtier extérieure (4), et
      - un système de refroidissement d'air pour lequel de l'air froid venant de l'environnement est aspiré dans le boîtier (3) au moyen d'un système de transport d'air (26) par une entrée d'air (27) et est guidé dans le boîtier (3) par un conduit d'air (28) vers une sortie d'air (29), sachant que le conduit d'air (28) est constitué saisissant au moins le compartiment thermo-isolant (14), **caractérisé en ce qu'**un algorithme de régulation est agencé pour déterminer la puissance calorifique manquante par les éléments de chauffe radiants (31) défectueux et compenser à l'aide d'une durée de chauffage plus longue de telle manière que la quantité de chaleur apportée au total par les éléments de chauffe radiants (21) non défectueux reste constante indépendamment du nombre d'éléments de chauffe radiants (21) défectueux dans la mesure où un nombre défini d'éléments de chauffe radiants (21) défectueux n'est pas dépassé.

2. Dispositif (1) selon la revendication 1, **caractérisé en ce que** les éléments de chauffe radiants (21) sont entourés d'une paroi intérieure (13) et le compartiment thermo-isolant (14) est disposé entre la paroi intérieure (13) et la paroi de boîtier extérieure (4).

3. Dispositif (1) selon la revendication 1 ou 2, **caractérisé en ce que** le compartiment thermo-isolant (14) est rempli au moins en partie d'un matériau thermo-isolant.

4. Dispositif (1) selon la revendication 3, **caractérisé en ce que** l'air froid traverse le matériau thermo-isolant lors de la conduite le long du conduit d'air (28).

**5.** Dispositif (1) selon au moins l'une quelconque des revendications précédentes, **caractérisé en ce que** le conduit d'air (28) est constitué de zones de contact ou de connexion électriques (22, 23) saisissant des éléments de chauffe radiants (21).

**6.** Dispositif (1) selon au moins l'une quelconque des revendications précédentes, **caractérisé en ce que** le conduit d'air (28) est constitué saisissant une surface de pose (15) sur laquelle se trouve la bouteille de boisson en verre (2), lorsque celle-ci est disposée dans le compartiment de réception de bouteille (7).

**7.** Dispositif (1) selon au moins l'une quelconque des revendications précédentes, **caractérisé en ce que** le système de chauffage (20) comporte un agencement d'éléments de chauffe radiants à barres, qui sont disposés autour du compartiment de réception de bouteille (7).

**8.** Dispositif (1) selon au moins l'une quelconque des revendications précédentes, **caractérisé en ce qu'**une protection d'intervention (25) est disposée dans le boîtier sur une ouverture de boîtier (6) par laquelle la bouteille de boisson en verre (2) peut être introduite dans le compartiment de réception de bouteille (7).

**9.** Dispositif (1) selon au moins l'une quelconque des revendications précédentes, *caractérisé en ce que* le système de chauffage (20) est couplé à un système de commande (19), qui est agencé pour piloter un fonctionnement du système de chauffage (20).

**10.** Dispositif (1) selon la revendication 9, **caractérisé en ce qu'**un système de détection (17) est couplé au système de commande (19), qui est agencé pour détecter si la bouteille de boisson en verre (2) est disposée dans le compartiment de réception de bouteille (7).

**11.** Dispositif (1) selon la revendication 9 ou 10, **caractérisé en ce que** le système de commande (19) est agencé pour bloquer une mise en marche du système de chauffage (20), lorsqu'il est constaté par le système de commande (19) que le système de détection (17) affiche pour une période de temps, qui est plus courte qu'une période de temps à valeur seuil, qu'aucune bouteille de boisson en verre (2) n'est disposée dans le compartiment de réception de bouteille (7).

**12.** Dispositif (1) selon au moins l'une quelconque des revendications 9 à 11, **caractérisé en ce qu'**un système de détection est couplé au système de commande (19), qui est agencé pour déterminer la boisson congelée, de telle manière que le système de commande (19) commande le système de chauffage (20) en fonction de la détermination de la boisson congelée.

**13.** Procédé pour décongeler une boisson congelée dans une bouteille de boisson en verre, pour lequel un dispositif (1) selon au moins l'une quelconque des revendications précédentes est fourni, une bouteille de boisson en verre (2) dans un compartiment de réception de bouteille (7) est disposée dans un boîtier (3) du dispositif (1) et la boisson congelée est décongelée dans la bouteille de boisson en verre (2).

Fig. 1

Fig. 2

Fig. 3

Fig. 4

Fig. 5

Fig. 6

33

36

37

38

26

Fig. 7

Fig. 8

Fig. 9

Fig. 10

25

Fig. 11

Fig. 12

43          43a

Fig. 13

Fig. 14

Fig. 15

FAN/L1 R5 10K

Net124

N(Filter) R6 10K Net123 R7 10K

U1 2322525

Nulldurchgang Signal

HI1AA1SR2M

GND

# Fig. 16

Fig. 17

42

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2005045617 A1
- US 7089749 B1
- JP H0386113 A
- GB 814808 A
- DE 704788 A
- US 2016242598 A1
- US 2004140304 A1